# FASCICULE DE BREVET EUROPEEN

(11) **EP 1 680 945 B1**
(45) Date de publication et mention de la délivrance du brevet: **08.09.2010**
(21) Numéro de dépôt: 04805369.8
(22) Date de dépôt: 03.11.2004
(51) Int. Cl.: H05B 3/84

(54) **VITRE FEUILLETEE CHAUFFANTE**
HEIZBARE VERBUNDGLASSCHEIBE
HEATED LAMINATED GLAZING

(30) Priorité: 07.11.2003 DE 10352464
(43) Date de publication de la demande: 19.07.2006
(73) Titulaire: SAINT-GOBAIN GLASS FRANCE, 92400 Courbevoie (FR)
(72) Inventeur: ANDRT, Jan, 26762 Komarov (CZ)
(74) Mandataire: Aupetit, Muriel J. C.
(86) Numéro de dépôt international: PCT/FR2004/002818
(87) Numéro de publication internationale: WO 2005/048656

(56) Documents cités:
- EP-A- 0 506 521
- US-A- 2 878 357
- US-A- 5 182 431
- US-A- 5 798 499

## Description

L'invention se rapporte à une vitre feuilletée chauffante au moyen de fils noyés, présentant les caractéristiques du préambule de la revendication 1.

### Discussion de l'état de la technique

Dans le document US 5,798,499, on décrit une vitre de cette nature à contour trapézoïdal, dont des surfaces triangulaires externes ainsi que la zone centrale de sa surface sont garnies de fils placés parallèlement les uns aux autres, qui peuvent être alimentés en courant de chauffage. Par comparaison avec les fils posés dans la zone centrale de la surface, qui ont sensiblement la même longueur entre eux, les longueurs utiles des fils (latéraux) dans les surfaces triangulaires sont de plus en plus raccourcies et ont dès lors - pour une même résistance ohmique par unité de longueur - de plus faibles valeurs de résistance. Il circulerait donc ici des courants plus forts, en l'absence d'autres mesures, ce qui pourrait conduire à des pointes de température indésirables et éventuellement inacceptables.

Par contour sensiblement trapézoïdal, on entend ici également un contour avec une ou plusieurs arêtes latérales courbes ou coudées. Ainsi, les arêtes plus longues du trapèze sont en tous cas courbes dans de nombreuses vitres chauffantes de ce type. Les arêtes (latérales) plus courtes sont au contraire sensiblement rectilignes.

Le problème fondamental d'une répartition uniforme de la température est déjà résolu de différentes manières selon le brevet US mentionné dans l'introduction.

Selon une forme de réalisation avantageuse, les fils plus courts dans les surfaces triangulaires externes sont fabriqués avec de plus petites sections transversales et dès lors avec des résistances plus élevées, pour exclure autant que possible des surchauffes locales. Selon une variante, les fils de chauffage latéraux sont disposés avec des distances mutuelles plus grandes que les fils disposés dans le champ de chauffage central. Certes, les fils plus courts sont alors plus chauds que leurs parallèles plus longs, toutefois la densité de chaleur est plus faible que dans le champ de chauffage central. La matière de la vitre feuilletée peut dès lors évacuer quand même sans dommages la chaleur plus importante. Les zones intermédiaires non chauffées dans cette configuration servent quasiment de surfaces de refroidissement.

La demande de brevet antérieure DE 103 16 387.5-34 divulgue encore d'autres options pour le même problème. Selon une forme de réalisation avantageuse, les fils de chauffage latéraux peuvent être alimentés avec une tension d'alimentation réduite par rapport aux fils disposés dans le champ de chauffage, parce que l'on prévoit par exemple un diviseur de tension ou une résistance d'entrée à l'intérieur d'un conducteur collecteur, ou que l'on alimente les fils de chauffage latéraux par des conducteurs collecteurs séparés.

Selon une autre forme de réalisation avantageuse, les fils de chauffage latéraux ont une résistance spécifique plus élevée que les fils disposés dans le champ de chauffage central. De cet te façon, les fils de chauffage latéraux peuvent être alimentés avec la même tension d'alimentation que Le champ de chauffage sans risque d'une surchauffe locale. Ceci peut être obtenu en utilisant des matières différentes pour les fils dans le champ de chauffage et pour les fils latéraux, pour lesquelles il résulte de la matière des résistances de longueur différentes même pour une même épaisseur de fil. Pour des fils en une matière identique, par exemple en tungstène généralement préféré pour des raisons de solidité, on peut obtenir des différences de résistance par exemple par des alliages ou par des diamètres différents ou des sections transversales différentes.

Enfin, il est également possible avec une subdivision adéquate des conducteurs collecteurs de courant d'adapter la puissance de chauffage des fils de chauffage plus courts en les alimentant avec une tension réduite.

Les mesures discutées plus haut peuvent être permutées aussi bien individuellement qu'en toutes combinaisons. Il n'est pas non plus absolument nécessaire de les prévoir symétriquement dans les deux surfaces triangulaires externes, au contraire ces équipements peuvent au besoin être différents l'un de l'autre.

En outre, on peut en principe admettre de produire des puissances de chauffage plus faibles dans les zones de la surface, qui sont chauffées par les autres fils de chauffage car, dans les cas préférés d'application à des pare-brise et à des lunettes arrière de véhicules, les surfaces triangulaires externes sont situées hors du champ de vision préféré des occupants du véhicule.

Il est en outre connu en principe (EP-B1-773 705, EP-B1-788 294), de munir des vitres feuilletées sur toute leur surface de fils de chauffage placés à des distances irrégulières, non parallèles les uns aux autres et/ou en arcs. A cet effet, il faut des machines et des commandes nettement plus coûteuses que pour la fabrication des vitres précitées.

Enfin, on connaît dans le domaine des chauffages par couches pour des vitres de fenêtre, un dispositif (US 2 878 357) dans lequel un revêtement transparent, électriquement conducteur sur une vitre de contour trapézoïdal est divisé en plusieurs pistes situées l'une à côté de l'autre, qui sont raccordées électriquement en série les unes aux autres à l'aide de conducteurs collecteurs disposés en alternance respectivement sur le bord supérieur et intérieur des pistes. On établit ainsi un diviseur de tension; le même courant circule dans toutes les pistes. Le résultat est que le courant circulant globalement (y compris dans les pistes courtes) est limité à la valeur que laisse passer la piste ayant la plus grande résistance (et la plus forte chute de tension). Avec des pistes de largeur égale et de longueurs différentes, on ne pourrait cependant pas obtenir une répartition homogène du chauffage.

Le document US 5,182,431 décrit une subdivision de conducteurs de chauffage, sensiblement parallèles et de même longueur entre eux, réalisés par sérigraphie ou par pose de fils, en quatre groupes qui sont raccordés en série en utilisant des conducteurs collecteurs supplémentaires. Des surchauffes dans les surfaces latérales triangulaires du contour trapézoïdal de la vitre sont évitées parce que les conducteurs de chauffage sont légèrement divergents entre les deux arêtes latérales parallèles de la vitre.

Par une diminution adéquate du nombre des conducteurs dans certains groupes du circuit série, respectivement dans certains champs, à chauffer de préférence, on procure une zone centrale avec une température de chauffage accrue, parce que le flux de courant maximal par conducteur de chauffage s'établit ici tandis qu'un courant moindre par conducteur de chauffage circule dans les autres zones.

Le document DE 101 26 869 A1 du demandeur décrit une vitre feuilletée de forme trapézoïdale asymétrique, chauffante avec des fils, avec une surface latérale triangulaire, qui est garnie de boucles de fil qui sont alimentées par deux conducteurs collecteurs disposés parallèlement très près l'un de l'autre sur un côté latéral. Dans la zone triangulaire moins haute, la boucle de fil est plus longue que dans la région de l'angle droit, afin de compenser quelque peu sa résistance plus faible.

Le document GB 2 091 527 décrit une vite chauffante avec un contour trapézoïdal, qui est équipée de fils de chauffage formés par sérigraphie, dans laquelle les conducteurs de chauffage s'étendent à distances égales entre les deux arêtes latérales formant un angle entre elles. Pour empêcher une surchauffe dans la région des conducteurs de chauffage plus courts, une partie des conducteurs de chauffage est interrompue selon ce document.

Le problème à la base de l'invention consiste, à partir de l'état de la technique mentionné en premier lieu, à procurer une autre solution du problème d'un chauffage aussi harmonieux que possible des surfaces triangulaires externes d'une vitre feuilletée chauffante à contour trapézoïdal.

Conformément à l'invention, ce problème est résolu par les caractéristiques de la revendication 1. Les caractéristiques des revendications dépendantes présentent des formes de réalisation avantageuses de cette solution.

### Discussion de l'invention

Conformément à l'invention, l'application d'un diviseur de tension déjà mentionnée comme possibilité de solution dans la demande antérieure peut être réalisée en raccordant les uns aux autres en série par groupes plusieurs fils de chauffage raccordés en parallèle entre eux, les groupes se trouvant l'un à côté de l'autre et étant reliés les uns aux autres sous une faible résistance ohmique à l'aide de portions de rails collecteurs de courant supplémentaires appropriés ou par des moyens équivalents. Ceci équivaut à un prolongement de la longueur de fil effective entre les deux rails collecteurs de courant principaux, et on peut dès lors prévoir pour les fils de chauffage latéraux la même tension d'alimentation (extérieure), éventuellement même des valeurs de résistance égales ou inférieures à celles du champ de chauffage central. Il existe pour cela plusieurs possibilités de réalisation.

La solution conforme à l'invention peut avantageusement être réalisée avec des installations conventionnelles pour la pose des fils de chauffage sur les films à équiper, parce qu'ici également, dans le cas le plus simple, les fils peuvent toujours être posés équidistants en hélice et être toujours parallèles l'un à l'autre sur les films, qui sont maintenus sur un support mobile en rotation en forme de tambour.

Si de telles vitres conformes à l'invention sont utilisées de préférence dans des véhicules comme pare-brise ou comme lunette arrière (de hayon), on peut cependant aussi envisager la pose spéciale conforme à l'invention avec des fils de chauffage pour des applications dans le domaine de la construction.

D'autres détails et avantages de l'objet de l'invention apparaîtront par les dessins de deux exemples de réalisation, et par leur description détaillée qui suit.

Dans ces dessins, qui sont des représentations simplifiées sans échelle précise,
La Figure 1 illustre une première forme de réalisation de la vitre feuilletée dans laquelle, dans une surface triangulaire externe, trois groupes de fils de chauffage parallèles entre eux sont raccordés en série les uns aux autres pour former un diviseur de tension; et
La Figure 2 représente une variante de la première forme de réalisation dans laquelle, dans une surface triangulaire externe, deux groupes de fils due chauffage parallèles sont raccordés en série les uns aux autres pour former un diviseur de tension.

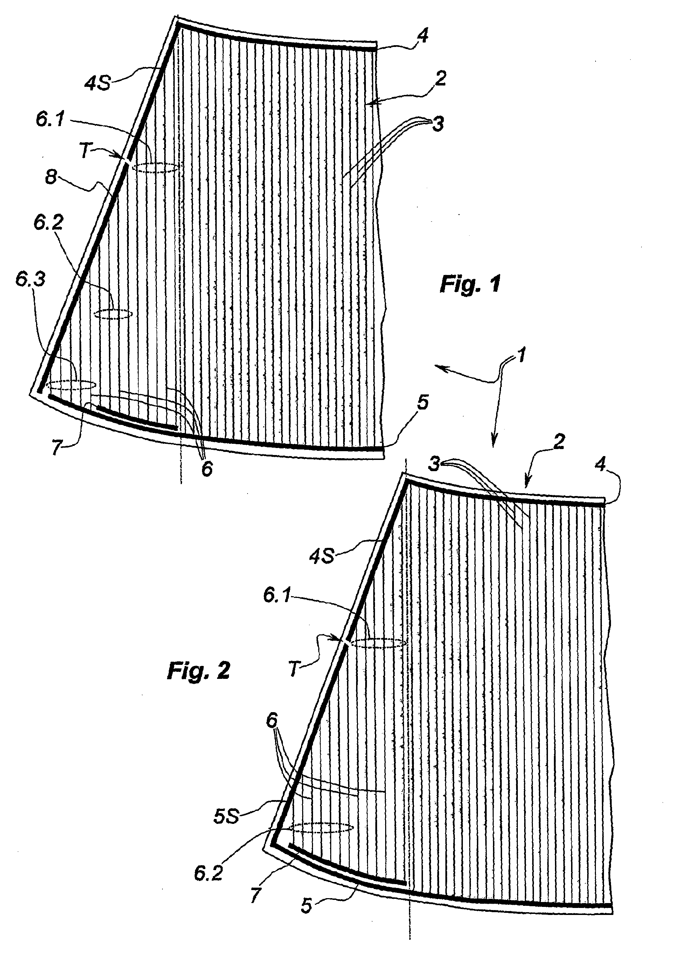

Selon la Figure 1, un champ de chauffage sensiblement rectangulaire 2 avec un ensemble de fils de chauffage 3 posés en ligne droite parallèlement les uns aux autres est de façon connue noyé dans une vitre feuilletée chauffante 1 de contour sensiblement trapézoïdal (curviligne). La vitre 1 n'est représentée ici qu'environ à moitié; son autre moitié est réalisée de manière identique. Le champ de chauffage 2 comporte en outre un conducteur collecteur supérieur 4 et un conducteur collecteur inférieur 5, qui sont également noyés dans le composite, de façon connue.

Ce composite se compose en règle générale de deux vitres rigides en verre et/ou en matière plastique, et d'une couche adhésive assemblant celles-ci en surface. Le champ de chauffage et les conducteurs collecteurs sont noyés dans la couche adhésive (par exemple un film adhésif thermoplastique en polyvinyle butyral "PVB" ou en éthylène-acétate de vinyle "EVA"), avant que celle-ci soit incorporée dans la vitre feuilletée.

Dans les vitres feuilletées chauffées par des fils, les conducteurs collecteurs se composent la plupart du temps de bandes de film métallique minces et étroites (cuivre, aluminium), qui sont appliquées avant et/ou après la pose des fils de chauffage. Les bandes de film sont prérevêtues d'une brasure (pré-étamées) et elles sont brasées avec les fils, le brasage devant assurer une incorporation aussi étroite que possible des fils (de tungstène). Ces caractéristiques sont connues dans l'état de la technique. Tous les conducteurs collecteurs présentent des résistances ohmiques négligeables par rapport aux fils de chauffage, et ne doivent pas chauffer sensiblement pendant le fonctionnement du chauffage.

Les écarts entre les fils de chauffage ne sont reproduits ici que d'une manière schématique. En règle générale, les fils sont posés à très faible distance les uns des autres (2 - 5 mm), afin d'obtenir un chauffage pratiquement homogène de la surface de la vitre. En réalité, ils sont également beaucoup plus minces que les conducteurs collecteurs 4 et 5, que ce qui peut être représenté ici. En faisant varier les écarts, on peut cependant régler selon les besoins les puissances de chauffage superficiel disponibles pour une résistance de fil prédéterminée. En outre, on n'a montré ici pour simplifier que des fils posés en ligne droite. Dans la pratique, on fera cependant légèrement "onduler" les fils de la manière habituelle, c'est-à-dire en les posant sous forme ondulée avec de faibles longueurs d'onde et de faibles amplitudes, parce ceux-ci sont alors beaucoup moins apparents (en particulier, ils réduisent les effets de diffraction de la lumière).

Etant donné que, dans une fabrication industrielle en série, les films sont garnis en hélice de manière continue avec les fils, plusieurs films étant la plupart du temps posés simultanément sur un support en forme de tambour (voir entre autres le document EP-B1-773 705 mentionné dans l'introduction), les fils doivent être coupés le long des bords pour permettre la jonction des films. Le faible angle d'inclinaison des axes longitudinaux des fils par rapport à l'axe central de la vitre, imposé par la pose en hélice des fils, n'est pas représenté ici pour des raisons de simplification.

De façon connue, on peut prévoir deux (ou plus) champs de chauffage 2 à alimentation électrique séparée dans la vitre feuilletée 1 (avec une division verticale par exemple au milieu de la vitre), qui doivent naturellement aussi être raccordés par des raccords extérieurs séparés à la source de tension respective. On peut dans ce cas utiliser un conducteur de masse commun pour les deux champs de chauffage, de sorte que seul le conducteur collecteur 4 ou le conducteur collecteur 5 doit être scindé en deux parties, tandis que l'autre de ceux-ci est continu. Dans la première variante, il faut quatre raccords extérieurs, dans la deuxième il n'en faut que trois.

On ne s'attardera pas ici sur les raccords extérieurs, parce que ceux-ci ont été à de nombreuses reprises décrits dans l'état de la technique. Il est en tous cas possible, dans la configuration montrée dans la Figure 1, de disposer les raccords en position rapprochée, dans les deux ou dans un des angles inférieurs de la vitre feuilletée 1.

Le conducteur collecteur supérieur 4 s'étend parallèlement au bord supérieur courbe de la vitre feuilletée 1, il est coudé dans les deux angles adjacents, et il se prolonge encore - de façon connue en soi - avec une branche 4S sur une partie importante de la longueur du côté latéral gauche visible ici de la vitre feuilletée 1, parallèlement à celui-ci, jusqu'au conducteur inférieur 5. Ce dernier s'étend pratiquement sur toute la longueur du côté inférieur courbe de la vitre feuilletée 1, à une distance sensiblement constante du bord de la vitre.

Le côté droit (non visible ici) de la vitre feuilletée est généralement symétrique. Dans la suite, on ne discutera donc les détails de la pose et de la disposition spéciale des fils que pour la zone latérale triangulaire gauche de la vitre 1.

Dans la surface triangulaire externe de la vitre feuilletée 1, à gauche du champ de chauffage 2, on a disposé un ensemble de fils de chauffage latéraux 6. Une ligne verticale en trait mixte symbolise la limite entre le champ de chauffage central 2 et les fils latéraux 6. Leurs longueurs diminuent en éventail de la droite vers la gauche. De ce fait, les fils plus courts présentent des résistances ohmiques moindres - si l'on choisit le même matériau.

Conformément à l'invention, la vitre feuilletée est garnie dans la zone triangulaire externe gauche d'un montage en série de trois groupes de fils de chauffage actifs disposés parallèlement les uns aux autres (les groupes sont rassemblés à titre d'illustration par des ellipses en trait mixte). Ces fils de chauffage se composent de préférence tous de la même matière. Des variations de matière sont cependant possibles également pour mieux adapter la puissance de chauffage locale. Toutefois, vu le mode de fabrication précité, des changements de matière lors de la pose des fils sont assez coûteux.

Tout de suite à gauche de la ligne de séparation en trait mixte entre le champ de chauffage central 2 et la zone latérale de la vitre feuilletée 1, un premier groupe 6.1 de fils de chauffage encore relativement longs est raccordé électriquement en haut à la branche 4S du conducteur collecteur 4 (dans cet exemple, cinq fils). Leur extrémité inférieure est raccordée électriquement à une portion supplémentaire de conducteur collecteur 7, qui est électriquement indépendante du conducteur collecteur 5, en particulier qui ne comporte pas de raccord extérieur propre. Elle est placée à faible distance parallèlement au conducteur collecteur 5 et sert uniquement pour la transmission du courant circulant dans le groupe 6.1 vers un deuxième groupe 6.2 de fils de chauffage (de longueur moyenne; ici quatre fils), qui s'étend du bas (portion 7) jusqu'à une autre portion de conducteur collecteur séparée 8.

Cette dernière est placée le long du bord gauche de la vitre 1, en alignement axial avec la branche 4S, et forme pour ainsi dire son prolongement, sans être pourtant raccordée électriquement à cele-ci. Tout comme la portion 7, celle-ci ne comporte pas de raccord extérieur propre. Elle peut être formée simplement par l'interruption de la branche longue 4S montrée dans la Fig. 1 en un point d'interruption T entre deux fils de chauffage de groupes différents. Ce point d'interruption est également représenté ici avec une largeur exagérée.

Un troisième groupe 6.3 de fils actifs à présent très courts s'étend de la portion de conducteur collecteur 8 jusqu'au conducteur collecteur 5 et forme ainsi le dernier élément du montage en série.

En supposant que le courant de chauffage circule à travers les fils depuis le conducteur collecteur 4 jusqu'au conducteur collecteur 5, il circule donc dans le groupe 6.1 de haut en bas (conducteur collecteur 7), dans le groupe 6.2 vers le haut (conducteur collecteur 8) et dans le groupe 6.3 à nouveau de haut en bas.

Le courant circulant au total dans les fils de chauffage latéraux des trois groupes est déterminé par le groupe ayant la résistance ohmique la plus élevée. Etant donné que la résistance totale d'un groupe dépend non seulement de la longueur des fils, mais aussi du nombre des fils à l'intérieur d'un groupe ainsi que le cas échéant aussi de leur résistance par unité de longueur, il est possible sans difficulté pour l'homme de métier d'obtenir un chauffage très homogène dans cette zone par une composition adéquate des groupes 6.1 à 6.3. Il est naturellement possible en outre, dans les groupes 6.1, 6.2 et/ou 6.3, de créer par des interruptions de type connu en soi un ou plusieurs fils passifs qui ne contribuent pas à la puissance de chauffage.

En cas de réalisation des trois groupes avec la même matière de fil et le même nombre de fils actifs, le groupe 6.1 avec les fils les plus longs aurait aussi naturellement la plus grande résistance déterminante pour le courant total sous une tension prédéterminée, et qui serait en particulier nettement plus grande que la résistance du groupe 6.3.

Une vitre expérimentale selon la Fig. 1 a été réalisée dans le champ de chauffage 2 avec des fils de chauffage 3 d'une résistance de 150 Ω/m et des fils de chauffage latéraux 6 d'une résistance de 100 Ω/m. Les fils de chauffage latéraux avaient donc même une résistance plus faible par unité de longueur que les fils de chauffage 3. Il est apparu dans la thermographie que cette division en trois groupes permettait d'obtenir une assez bonne homogénéisation des surfaces triangulaires avec le champ de chauffage 2 - à l'exception du groupe externe 6.3 qui, dans la disposition choisie, transportait manifestement trop peu de courant pour devenir même simplement chaud.

Malgré tout, même une configuration dans laquelle les résistances des trois groupes sont égales entre elles, ne conduirait pas obligatoirement à produire la même puissance de chauffage partout.

La Figure 2 montre, en variante à la forme de réalisation de la Figure 1, une division en deux groupes seulement 6.1 et 6.2 de fils de chauffage parallèles. Cette configuration n'a besoin que d'un seul conducteur collecteur supplémentaire 7, qui est à nouveau situé à faible distance parallèlement au conducteur collecteur 5. Elle nécessite cependant un prolongement du conducteur collecteur 5 autour de l'angle inférieur gauche de la vitre feuilletée 1 par une branche 5S, analogue à la branche 4S du conducteur collecteur supérieur (ou une mesure équivalente, avec laquelle les extrémités supérieures des fils dans le groupe 6.2 sont raccordées en commun avec une faible résistance ohmique au conducteur collecteur 5).

Dans le présent cas de réalisat ion, les deux branches 4S et 5S s'étendant selon le même axe se terminent à proximité immédiate l'une de l'autre approximativement au milieu de la hauteur de la vitre feuilletée 1, respectivement de son côté latéral. On pourrait au besoin disposer à cet endroit, de part et d'autre de l'espace T, des raccords extérieurs des deux conducteurs collecteurs 4/4S et 5/5S, directement l'un à côté de l'autre.

Il serait cependant également possible ici (à la différence de la représentation) de placer les raccords extérieurs des conducteurs collecteurs 4 et 5 dans un angle inférieur ou supérieur de la vitre 1. A cet effet, la branche 4S devrait être prolongée dans la Figure 1 parallèlement au conducteur collecteur supplémentaire 8 respectivement dans la Figure 2 parallèlement à la branche 5S jusque dans l'angle inférieur gauche.

Comme dans la configuration de la Figure 1, le groupe 6.1 commence à la branche 4S et se termine à la portion de conducteur collecteur supplémentaire 7. Le deuxième groupe 6.2 part de celle-ci à nouveau vers le haut et se termine dans la branche 5S. Ceci est également valable pour le courant, à nouveau en supposant qu'il circule du conducteur collecteur 4 vers le conducteur collecteur 5. Dans le groupe 6.1, il circule vers le bas, et dans le groupe 6.2 vers le haut.

Pour la constitution détaillée des deux groupes 6.1 et 6.2 de la Figure 2, ce qui a été dit pour les groupes 6.1 à 6.3 de la Figure 1 est également valable ici. Les fils de chauffage latéraux 6 ont à nouveau été réalisés avec une résistance de 100 Ω/m seulement et les fils de chauffage 3 avec une résistance de 150 Ω/m.

La forme de réalisation selon la Figure 2 a permis d'obtenir le meilleur résultat thermographique pour tous les échantillons. On a pu atteindre une homogénéisation pratiquement totale de la puissance de chauffage sur toute la surface de la vitre feuilletée chauffante, notamment aussi bien après 4 qu'après 8 minutes de chauffage. La puissance nominale sous 12 V valait 477 W (courant total environ 41 A) et se situait ainsi pleinement dans la plage des spécifications du client. Il n'est apparu de pointes de chaleur inadmissibles en aucun endroit.

En ce qui concerne la méthode de pose des fils discutée plus haut, il convient de remarquer que des fils, qui pourraient raccorder les conducteurs collecteurs supplémentaires 7 dans les Figures 1 et 2 directement au conducteur collecteur 5, doivent naturellement être coupés; le cas échéant, les courtes portions concernées pourraient être retirées du composite après la coupe. Il en résulte alors en réalité l'image simplifiée dans les figures, de l'absence de fils dans l'espace intermédiaire étroit entre 7 et 5.

Le bord de la vitre feuilletée 1 et dès lors aussi les conducteurs collecteurs 4 et 5, ainsi que 7 et 8 et éventuellement leurs raccords extérieurs, dans la mesure où ils ne débordent pas au-delà du bord de la vitre, peuvent de façon connue être masqués par un cadre coloré opaque, qui n'est pas représenté ici pour que les conducteurs collecteurs soient visibles.

Il convient de remarquer finalement que des raccords électriques extérieurs sur les portions de conducteur collecteur 7 et 8 ne sont certes pas nécessaires pour le fonctionnement de chauffage, mais que des potentiels d'antenne, par exemple pour une application diversité, pourraient néanmoins être connectés à ces conducteurs collecteurs supplémentaires, par exemple pour une utilisation (supplémentaire) de la vitre feuilletée comme vitre d'antenne, tout comme aux conducteurs collecteurs 4 et 5 et à leurs branches. Pour contacter le conducteur collecteur 7 de l'extérieur, il faudrait par exemple, de façon connue, croiser avec celui-ci un raccord extérieur séparé isolé par rapport au conducteur collecteur 5.

## Revendications

1. Vitre feuilletée chauffante (1) de contour sensiblement trapézoïdal et avec un champ de chauffage (2) noyé dans le composite, qui est formé par des fils de chauffage (3) posés les uns à côté des autres et au moins deux conducteurs collecteurs (4, 5) reliant les unes aux autres les extrémités de plusieurs fils de chauffage (3) en un montage électrique parallèle et placés en position opposée le long des côtés latéraux de la vitre feuilletée (1) parallèles l'un à l'autre, dans laquelle au moins un conducteur collecteur (4S, 5S; 8) s'étend également le long du côté latéral dans la zone d'une surface triangulaire externe du contour trapézoïdal et aussi au moins une surface triangulaire externe du contour trapézoïdal est garnie d'autres fils de chauffage (6) orientés sensiblement parallèlement les uns aux autres et aux fils de chauffage (3) du champ de chauffage (2) et pouvant être alimentés électriquement par des conducteurs collecteurs (4S, 5; 5S; 8), dans laquelle il est en outre prévu au moins deux groupes de fils de chauffage reliés électriquement en série l'un à l'autre, **caractérisée en ce que** des fils de chauffage (6) placés parallèlement les uns à côté des autres avec des longueurs différentes sont rassemblés en groupes raccordés en parallèle (6.1, 6.2, 6.3) dans la zone, au moins d'une surface triangulaire externe, et **en ce qu'**au moins deux de ces groupes sont raccordés électriquement en série entre eux, de telle façon que la longueur de fil effective entre les deux rails collecteurs de courant principaux soit augmentée, afin d'homogénéiser la puissance de chauffage dans la surface triangulaire avec la puissance de chauffage dans le champ de chauffage (2).

2. Vitre feuilletée chauffante selon la revendication 1, **caractérisée en ce que** l'on utilise des conducteurs collecteurs supplémentaires (7, 8) comme liaison chaque fois entre deux groupes (6.1, 6.2; 6.2, 6.3).

3. Vitre feuilletée chauffante selon la revendication 2, dans laquelle les conducteurs collecteurs supplémentaires (7, 8) sont disposés parallèlement aux conducteurs collecteurs (4S et/ou 5).

4. Vitre feuilletée chauffante selon la revendication 1 ou 2 ou 3, dans laquelle le nombre des fils des groupes individuels (6.1, 6.2, 6.3) est différent ou égal.

5. Vitre feuilletée chauffante selon l'une quelconque des revendications 1 à 4, dans laquelle des branches (4S, 5S) des deux conducteurs collecteurs (4, 5) s'étendent également le long d'au moins un côté latéral dans la zone des surfaces triangulaires externes du contour trapézoïdal et se terminent de part et d'autre d'un point d'interruption (T).

6. Vitre feuilletée chauffante selon la revendication 5, dans laquelle des raccords extérieurs des deux conducteurs collecteurs (4, 5) sont disposés dans la région des extrémités libres des branches (4S, 5S) de part et d'autre d'un point d'interruption (T).

7. Vitre feuilletée chauffante selon l'une quelconque des revendications précédentes, **caractérisée en ce que** les raccords extérieurs des, au moins deux conducteurs collecteurs (4, 5), sont raccordés en position rapprochée à proximité d'un angle de la vitre feuilletée.

8. Vitre feuilletée chauffante selon l'une quelconque des revendications précédentes, **caractérisée en ce qu'**au moins un des conducteurs collecteurs (4, 5) est divisé en deux portions électriquement séparées, dont chacune dispose d'un raccord extérieur.

9. Vitre feuilletée chauffante selon l'une quelconque des revendications précédentes, dans laquelle les fils de chauffage latéraux (6) ont une résistance ohmique par unité de longueur différente de celle des fils de chauffage (3) du champ de chauffage central (2).

10. Vitre feuilletée chauffante selon la revendication 9, dont les fils de chauffage latéraux (6) ont une résistance plus élevée que les fils de chauffage (3) du champ de chauffage central (2).

11. Vitre feuilletée chauffante selon la revendication 9, dont les fils de chauffage latéraux (6) ont une résistance moins élevée que les fils de chauffage (3) du champ de chauffage central (2).

12. Vitre feuilletée chauffante selon l'une quelconque des revendications précédentes, dans laquelle un ou plusieurs fils de chauffage latéraux (6) sont coupés, pour procurer des fils passifs individuels ou multiples, qui ne contribuent pas à la puissance de chauffage.

13. Vitre feuilletée chauffante selon l'une quelconque des revendications précédentes, dont les fils (3, 6) sont déposés en hélice sur des films de support.

14. Vitre feuilletée chauffante selon l'une quelconque des revendications précédentes, dont les fils (3', 6) sont ondulés avec des ondes et des amplitudes courtes par rapport à leur axe longitudinal posé sensiblement en ligne droite.

15. Vitre feuilletée chauffante selon l'une quelconque des revendications précédentes, **caractérisée en ce qu'**un ou plusieurs des conducteurs collecteurs (4, 5, 4S, 5S, 7, 8) sont pourvus de raccords extérieurs à des points de raccordement d'antennes.

16. Vitre feuilletée chauffante selon l'une quelconque des revendications précédentes, dont la région de bord est pourvue d'une bande colorée opaque, qui masque visuellement en particulier les conducteurs collecteurs.

17. Utilisation d'une vitre feuilletée chauffante selon l'une quelconque des revendications précédentes dans un véhicule, en particulier comme pare-brise ou lunette arrière.

## Claims

1. A heatable laminated pane (1) having a trapezoidal outline and having a heating area (2) which is embedded in the composite and is formed from heating wires (3), which are laid alongside one another, and at least two busbars (4, 5) which connect the ends of a number of heating wires (3) to one another electrically in parallel and are located opposite along the side edges of the laminated pane (1), which run parallel to one another, with at least one busbar (4S, 5S; 8) also extending along the side edge in the area of an outer triangular surface of the trapezoidal outline, and also with at least one outer triangular surface of the trapezoidal outline occupied by further heating wires (6) which can be fed electrically via busbars (4S, 5; 5S; 8) and run essentially parallel to one another and to the heating wires (3) of the heating area (2), and further with at least two groups of heating wires, which are electrically connected in series with one another, **characterized in that**, in the area of the at least one outer triangular surface, heating wires (6) which are located parallel alongside one another and have different lengths are combined to form groups (6.1, 6.2, 6.3) connected in parallel, and **in that** at least two of these groups are electrically connected to one another in series such that the effective wire length between the two main busbars is increased, in order to homogenize the heating power in the triangular surface with the heating power in the heating area (2).

2. The heatable laminated pane according to claim 1, **characterized in that** additional busbars (7, 8) are used as a connection between in each case two groups (6.1, 6.2; 6.2, 6.3).

3. The heatable laminated pane according to claim 2, in which the additional busbars (7, 8) are arranged in parallel with the busbars (4S and/or 5).

4. The heatable laminated pane according to claim 1, 2 or 3, in which the number of wires in the individual groups (6.1, 6.2, 6.3) is different or is the same.

5. The heatable laminated pane according to one of claims 1 to 4, in which branchs (4S, 5S) of the two busbars (4, 5) also extend along at least one side edge in the area of the outer triangular surfaces of the trapezoidal outline, and end on both sides of a separation point (T).

6. The heatable laminated pane according to claim 5, in which external connections of the two busbars (4, 5) are arranged in the area of the free ends of the branchs (4S, 5S) on both sides of a separation point (T).

7. The heatable laminated pane according to one of the preceding claims, **characterized in that** the external connections of the at least two busbars (4, 5) are connected in a physically adjacent form close to a corner of the laminated pane.

8. The heatable laminated pane according to one of the preceding claims **characterized in that** at least one of the busbars (4, 5) is subdivided into two electrically separate sections, each of which has an external connection.

9. The heatable laminated pane according to one of the preceding claims, in which the side heating wires (6) have an ohmic resistance per unit length which differs from that of the heating wires (3) in the central heating area (2).

10. The heatable laminated pane according to claim 9, whose side heating wires (6) have a higher resistance than the heating wires (3) in the central heating area (2).

11. The heatable laminated pane according to claim 9, whose side heating wires (6) have a lower resistance than the heating wires (3) in the central heating area (2).

12. The heatable laminated pane according to one of the preceding claims, in which one or more side heating wires (6) are cut through in order to produce one or more passive wires which do not contribute to the heating power.

13. The heatable laminated pane according to one of the preceding claims, whose wires (3, 6) are placed on mounting sheets in a helical shape.

14. The heatable laminated pane according to one of the preceding claims, whose wires (3, 6) are rippled with short waves and amplitudes with respect to their longitudinal axis, which is essentially in a straight line.

15. The heatable laminated pane according to one of the preceding claims, **characterized in that** one or more of the busbars (4, 5, 4S, 5S, 7, 8) is or are provided with external connections at antenna connecting points.

16. The heatable laminated pane according to one of the preceding claims, whose edge area is provided with an opaque colored strip which, in particular, optically masks the busbars.

17. Use of a heatable laminated pane according to one of the preceding claims in a vehicle, in particular as a windshield or rear window.

## Patentansprüche

1. Beheizbare Verbundglasscheibe (1) mit im Wesentlichen trapezförmiger Kontur und mit einem in den Verbund eingebetteten Heizfeld (2), das von nebeneinander verlegten Heizdrähten (3) und wenigstens zwei Sammelleitern (4, 5) gebildet ist, welche die Enden mehrerer Heizdrähte (3) untereinander zu einer elektrischen Parallelschaltung verbinden und in gegenüberliegender Position entlang der Seitenkanten der Verbundglasscheibe (1) parallel zueinander angeordnet sind, wobei wenigstens ein Sammelleiter (4S, 5S; 8) sich auch entlang der Seitenkante in einen Bereich einer dreieckigen Außenfläche der trapezförmigen Kontur erstreckt und auch wenigstens eine dreieckige Außenfläche der trapezförmigen Kontur mit weiteren Heizdrähten (6) versehen ist, die zueinander und zu den Heizdrähten (3) des Heizfeldes (2) im Wesentlichen parallel ausgerichtet sind und über Sammelleiter (4S, 5; 5S; 8) elektrisch versorgt werden können, wobei ferner wenigstens zwei Gruppen von Heizdrähten vorgesehen sind, die untereinander elektrisch in Reihe verbunden sind, **dadurch gekennzeichnet, dass** parallel nebeneinander angeordnete Heizdrähte (6) mit unterschiedlichen Längen im Bereich wenigstens einer dreieckigen Außenfläche zu parallel angeschlossenen Gruppen (6.1, 6.2, 6.3) zusammengefasst sind, und dass wenigstens zwei dieser Gruppen untereinander elektrisch in Reihe verbunden sind, derart, dass die effektive Drahtlänge zwischen den beiden Hauptstromsammelschienen erhöht wird, um die Heizleistung in der dreieckigen Fläche mit der Heizleistung in dem Heizfeld (2) zu homogenisieren.

2. Beheizbare Verbundglasscheibe nach Anspruch 1, **dadurch gekennzeichnet, dass** zusätzliche Sammelleiter (7, 8) jedes Mal als Verbindung zwischen zwei Gruppen (6.1, 6.2; 6.2, 6.3) verwendet werden.

3. Beheizbare Verbundglasscheibe nach Anspruch 2, wobei die zusätzlichen Sammelleiter (7, 8) zu den Sammelleitern (4S und/oder 5) parallel angeordnet sind.

4. Beheizbare Verbundglasscheibe nach Anspruch 1 oder 2 oder 3, wobei die Anzahl der Drähte der einzelnen Gruppen (6.1, 6.2, 6.3) unterschiedlich oder gleich ist.

5. Beheizbare Verbundglasscheibe nach einem der Ansprüche 1 bis 4, wobei Zweige (4S, 5S) der beiden Sammelleiter (4, 5) sich auch entlang wenigstens einer Seitenkante in den Bereich der dreieckigen Außenflächen der trapezförmigen Kontur erstrecken und auf beiden Seiten eines Unterbrechungspunktes (T) enden.

6. Beheizbare Verbundglasscheibe nach Anspruch 5, wobei Außenanschlüsse der beiden Sammelleiter (4, 5) im Bereich der freien Enden der Zweige (4S, 5S) auf beiden Seiten eines Unterbrechungspunktes (T) angeordnet sind.

7. Beheizbare Verbundglasscheibe nach einem der vorstehenden Ansprüche, **dadurch gekennzeichnet, dass** die Außenanschlüsse der wenigstens zwei Sammelleiter (4, 5) in angenäherter Position in der Nähe einer Ecke der Verbundglasscheibe angeschlossen sind.

8. Beheizbare Verbundglasscheibe nach einem der vorstehenden Ansprüche, **dadurch gekennzeichnet, dass** wenigstens einer der Sammelleiter (4, 5) in zwei elektrisch getrennte Abschnitte unterteilt ist, von denen ein jeder über einen Außenanschluss verfügt.

9. Beheizbare Verbundglasscheibe nach einem der vorstehenden Ansprüche, wobei die seitlichen Heizdrähte (6) einen anderen ohmschen Widerstand pro Längeneinheit als die Heizdrähte (3) des mittleren Heizfeldes (2) aufweisen.

10. Beheizbare Verbundglasscheibe nach Anspruch 9, deren seitliche Heizdrähte (6) einen höheren Widerstand als die Heizdrähte (3) des mittleren Heizfeldes (2) aufweisen.

11. Beheizbare Verbundglasscheibe nach Anspruch 9, deren seitliche Heizdrähte (6) einen niedrigeren Widerstand als die Heizdrähte (3) des mittleren Heizfeldes (2) aufweisen.

12. Beheizbare Verbundglasscheibe nach einem der vorstehenden Ansprüche, wobei ein oder mehrere seitliche Heizdrähte (6) unterbrochen sind, um einzelne oder mehrfache passive Drähte bereitzustellen, die nicht zur Heizleistung beitragen.

13. Beheizbare Verbundglasscheibe nach einem der vorstehenden Ansprüche, deren Drähte (3, 6) schraubenförmig auf Tragfilmen angeordnet sind.

14. Beheizbare Verbundglasscheibe nach einem der vorstehenden Ansprüche, deren Drähte (3, 6) gegenüber ihrer im Wesentlichen in gerader Linie angeordneten Längsachse mit kurzen Wellen und Ausschlägen gewellt sind.

15. Beheizbare Verbundglasscheibe nach einem der vorstehenden Ansprüche, **dadurch gekennzeichnet, dass** einer oder mehrere der Sammelleiter (4, 5, 4S, 5S, 7, 8) mit Außenanschlüssen an Antennenanschlusspunkten versehen sind.

16. Beheizbare Verbundglasscheibe nach einem der vorstehenden Ansprüche, deren Randbereich mit einem opaken Farbstreifen versehen ist, der insbesondere die Sammelleiter visuell verdeckt.

17. Verwendung einer beheizbaren Verbundglasscheibe nach einem der vorstehenden Ansprüche, in einem Fahrzeug, insbesondere als Windschutzscheibe oder Heckscheibe.
